# EUROPEAN PATENT APPLICATION

(11) **EP 2 626 246 A1**
(43) Date of publication of application: **14.08.2013**
(21) Application number: 12177272.7
(22) Date of filing: 20.07.2012
(51) Int. Cl.: B60R 1/10

(54) **Vehicular infrared night assistant driving system**

(30) Priority: 09.02.2012 CN 201220042439 U
(71) Applicant: Guangzhou SAT Infrared Technology Co., Ltd., Guangzhou Economic & Techn. Development District Guangzhou 510730 (CN)
(72) Inventor: Wu, Jiping, 510730 Guangzhou (CN)
(74) Representative: Pallini, Diego

(57) **Abstract**

A vehicular infrared night assistant driving system, comprising: a vehicle rotation followup mechanism rotatably fixed at the front portion of the vehicle, rotates an angle corresponding to a rotation of a wheel; a night vision infrared camera fixed onto the vehicle rotation followup mechanism , rotates synchronously with the rotation of the vehicle rotation followup mechanism and captures infrared images of objects ahead of the vehicle in real time; a wheel sensing mechanism fixed on the wheel, detects in real time the rotation angles of the wheel and gear position of the vehicular, outputs the information related to the rotation angles and the gear positions; an Electronic Control Unit(ECU) connected respectively with the wheel sensing mechanism and the vehicle rotation followup mechanism , generates and outputs control signals for controlling the rotation of the vehicle rotation followup mechanism based on the information output from the wheel sensing mechanism.. The present invention makes the infrared camera rotate synchronously with that of the wheel, thus eliminating the visual-field defect of the thermal imaging while the vehicular is changing its direction. Consequently, it improves security while driving at night.

## Description

### FIELD OF INVENTION

The present invention relates to an assistant driving system, especially to a vehicular infrared night assistant driving system which is applicable to the field of vehicle driving safety.

### BACKGROUND

Conventionally, the vehicular infrared night assistant driving system only captures infrared images within the area of the FOV of the infrared camera with its infrared lens fixed in front of the engine. When a vehicle moves straight at night or merely turns around on a small curve, the infrared lens may still be able to capture the situations of the road that does not deviate away from the FOV of the infrared lens, thus it doesn't influence the night driving safety. However, if the curve turns around in a relatively big angle, the head of the vehicle can't keep the same direction of the road. Therefore, there is a time lag as the head of the vehicle is adjusted to the same direction of the road. This will result in that the infrared lens can't detect the situations of the road normally and a blind zone appears in the captured infrared images. Under this circumstance, the infrared camera night assistant driving system fails to perform its expected function.

### SUMMARY OF THE INVENTION

In order to solve the above problem, the present invention provides a vehicular infrared night assistant driving system which enables an instant display of infrared images ahead of the curve when a vehicle is turning around thereon in night driving, thus eliminating the blind zone and enabling the driver to respond more quickly upon the situations of the road when turning around.

To achieve the above object, the present invention provides a vehicular infrared night assistant driving system, wherein the system comprises a vehicle rotation followup mechanism rotatably fixed at the front portion of the vehicular, rotates an angle corresponding to a rotation of a wheel; a night vision infrared camera fixed onto the vehicle rotation followup mechanism, rotates synchronously with the rotation of the vehicle rotation followup mechanism and captures infrared images of objects ahead of the vehicle in real time; a wheel sensing mechanism fixed on the wheel, detects rotation angles of the wheel and gear positions of the vehicular in real time, and outputs information related to the rotation angles and gear positions; an Electronic Control Unit(ECU) connected with the wheel sensing mechanism and the vehicle rotation followup mechanism respectively, generates and outputs control signals for controlling the rotation of the vehicle rotation followup mechanism based on the information related to the rotation angles and the gear positions from the wheel sensing mechanism.

The vehicle rotation followup mechanism according to this embodiment comprises: a rotatable base rotatably attached at the front portion of the vehicle; a servomotor connected with the rotatable base and for driving the rotatable base to rotate based on the controlling signals generated from the ECU.

The rotatable base according to this embodiment comprises: a chassis fixed on the front portion of the vehicle; a rotor provided on the chassis; and an actuator provided on the chassis and for actuating the rotor to rotate while being driven by the servomotor.

the vehicular infrared night assistant driving system according to this embodiment further comprising: a LCD provided in a cab of the vehicle and connected with the night vision infrared camera. The LCD displays the infrared images captured by the night vision infrared camera.

The night vision infrared camera according to this embodiment comprises: an infrared lens for collecting infrared signals of the objects ahead of the vehicle; a UFPA infrared detector for transforming the infrared signals projected and focused thereon by the infrared lens into corresponding electrical signals; and a video process unit connected with the UFPA infrared detector and for transforming the electrical signals into video signals.

The wheel sensing mechanism according to this embodiment comprises: a wheel rotation sensor provided on the wheel. The wheel rotation sensor senses the rotation angles of the wheel and outputs the corresponding information of the rotation angles to the ECU; and a gear detector provided on a gear controlling portion of the vehicle. The gear detector senses the gear positions of the vehicle and outputs corresponding information of the gear position to the ECU.

The ECU according to this embodiment comprises: an information collection module connected with the wheel sensing mechanism and for collecting the information of the rotation angles and the gear positions output from the wheel sensing mechanism; a computation module connected with the information collection module. The computation module performs computations based on the information of rotation angles and the gear positions from the information collection module to obtain the azimuth signals of the vehicle; and a control module connected with the computation module and for generating control signals based on the azimuth signals of the vehicle from the computation module, and then outputting the control signals to the vehicle rotation followup mechanism.

The azimuth signals according to this embodiment are signals related to the azimuth of the vehicle, having values identical or corresponding to the rotation angles. When the information of the gear position indicates that the vehicular is moving ahead in forward gear, the azimuth of the vehicle is in the same of the rotation angles; and when the information of the gear position indicates that the vehicle is moving backward in reverse gear, the azimuth of the vehicle is in an opposite direction of the rotation angles.

The foregoing technical solutions have advantages as following: the vehicular infrared night assistant driving system of the present application provides infrared images ahead of the road at night with a night vision infrared camera provided on the vehicle. With these images, the driver is able to be well-informed with the road situations even in bad visual conditions so as to improve night driving safety. Furthermore, since the night vision infrared camera is provided on a vehicle rotation followup mechanism which is in linkage operations with the wheel, when the vehicle is moving at night and turning around on a curve, the night vision infrared camera can be quickly adjusted to the same direction of the road and capture the images ahead of the road to be displayed on the LCD so as to inform the situations of the road to the driver immediately. This will eliminate the blind zone and enable the driver to respond more quickly upon the situations of the road. Especially in an exhausted night driving, the present system provides more precise information on the situations of the road and longer time to respond for the driver, thus it's helpful for reducing the drivers' pressure.

### BRIEF DESCRIPTION OF THE DRAWINGS

FIG.1 is a block diagram of the vehicular infrared night assistant driving system of the present application.
FIG.2 and FIG.3 show the rotation directions of the wheel and the vehicle rotation followup mechanism when a vehicle is moving ahead in forward gear.
FIG.4 and FIG.5 show the rotating directions of the wheel and the vehicle rotation followup mechanism when the car is moving back in reverse gear.

The reference signs are explained below:
1- wheel sensing mechanism
   11- wheel rotation sensor
   12- gear detector
2- ECU
   21- information collection module
   22- computation module
   23-control module
3- night vision infrared camera
4- LCD
5- vehicle rotation followup mechanism
   51-rotatable base
   52-servomotor

### DETAILED DESCRIPTION OF THE PREFERRED EMBODIMENT

The foregoing and other objects, aspects and advantages of the present invention will become more apparent from the following detailed description of the present application when taken in conjunction with the preferred embodiments and accompanying drawings. The embodiments here are only used to illustrate but not to limit the present application.

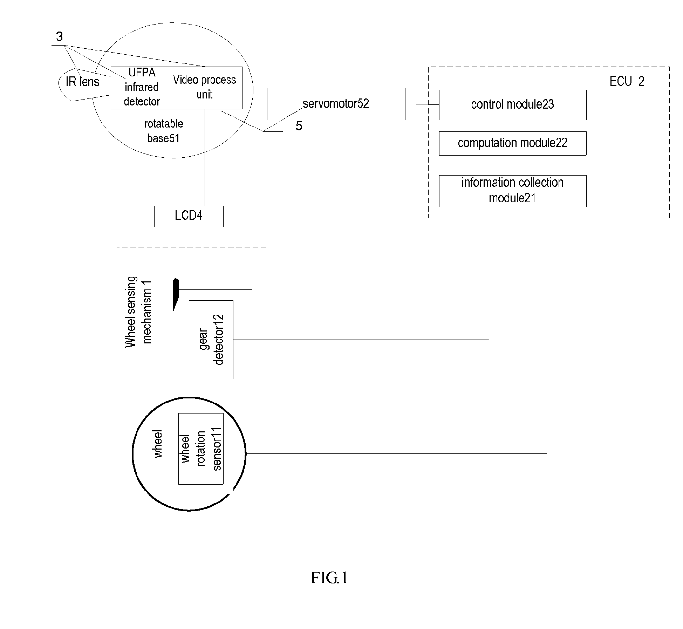

FIG.1 shows the block diagram of the vehicular infrared night assistant system according to an embodiment of the present application, wherein the system may comprise: a vehicle rotation followup mechanism 5 rotatably fixed at the front portion of the vehicle, the vehicle rotation followup mechanism 5 rotates an angle corresponding to a rotation of a wheel; a night vision infrared camera 3 provided on the vehicle rotation followup mechanism 5, the night vision infrared camera 3 rotates synchronously with the rotation of the vehicle rotation followup mechanism 5 and captures in real-time infrared images of objects in front of the vehicle; a wheel sensing mechanism 1 provided on the wheel, the wheel sensing mechanism 1 detects in real-time rotation angles of the wheel and gear positions of the vehicle, and outputs information related to the rotation angles and the gear positions; and an ECU (Electronic Control Unit) 2 connected respectively with the wheel sensing mechanism 1 and the vehicle rotation followup mechanism 5, based on the information of the rotation angles and the gear positions detected by the wheel sensing mechanism 1, the ECU2 generates and outputs control signals for controlling the vehicle rotation followup mechanism 5.

The system may further comprise a LCD 4 provided in the cab of the vehicle and connected with the night vision infrared camera 3, the LCD 4 displays the infrared images captured by the night vision infrared camera 3. To facilitate the driver's observation, the LCD 4 may be fixed in the vicinity of the wheel.

Referring to FIG.1, the night vision infrared camera 3 may be connected with the LCD 4 either by a video cable or by way of wireless access to achieve the transmission of video signals. In the present embodiment, the LCD 4 may be fixed on the GPS portion in the cab. According to one embodiment of the present application, the LCD 4, for example, may display the infrared videos by a display screen of the GPS system of the vehicle.

The vehicle rotation followup mechanism 5 may comprise: a rotatable base 51 rotatably attached at the front portion of the vehicle; and a servomotor 52 connected with the rotatable base 51 and for driving the rotation of the rotatable base 51 based on the control signals from the ECU 2.

The night vision infrared camera may comprise: an infrared lens for collecting infrared signals of the objects in front of the vehicle; a UFPA (Uncooled Focal Plane Array) infrared detector for transforming the infrared signals projected and focused thereon by the infrared lens into corresponding electrical signals; and a video process unit connected with the UFPA infrared detector and for transforming the electrical signals into video signals. Since the night vision infrared camera 3 can receive infrared light which is invisible for human eyes to form infrared images, the night vision infrared camera 3 is able to capture both human beings and other objects at night.

The wheel sensing mechanism 1 may comprise: a wheel rotation sensor 11 provided on the wheel, the wheel rotation sensor 11 senses rotation angles of the wheel and outputs corresponding information of the rotation angles to the ECU 2; and a gear detector 12 provided on the gear control portion of the vehicle, the gear detector 12 senses the gear positions of the vehicle and outputs corresponding information of the gear positions to the ECU 2.

The ECU 2 may comprise: an information collection module 21 connected with the wheel sensing mechanism 1 and for collecting the information of the rotation angles and the gear positions output from the wheel sensing mechanism 1; a computation module 22 connected with the information collection module 21, the computation module 22 performs computations based on the information of the rotation angles and the gear positions collected by the information collection module 21 to obtain azimuth signals of the vehicle; and a control module 23 connected with the computation module 22 and for generating the control signals based on the azimuth signals of the vehicle from the computation module 22, and then outputting the control signals to the vehicle rotation followup mechanism 5.

The azimuth signals of the vehicle may comprise azimuths of the vehicle with values equivalent to the rotation angles. When the information of the gear position shows that the vehicle is moving ahead in forward gear, the azimuth of the vehicle is in the same direction of the rotation angle; and when the information of the gear position shows that the vehicle is moving backward in reverses gear, the azimuth of the vehicle is in an opposite direction of the rotation angle.

The night vision infrared camera 3 according to the present embodiment is fixed on the rotatable base 51 of the vehicle rotation followup mechanism 5 in front of the vehicle. The servomotor 52 in the vehicle rotation followup mechanism 5 drives the pivot of the rotatable base 51 to rotate, and the night vision infrared camera 3 rotates synchronously with the rotatable base 51. The rotation angles of the rotating base 51 are determined according to the information of the rotation angles of the wheel and the gear positions, enabling the driver to directly observe the situations of the road in time when turning around in night driving, especially when turning around in a relatively big angle, so as to eliminate the blind zone and to ensure driving safety.

The rotating base 51 may comprise: a chassis fixed at the front portion of the vehicle; a rotor rotatably provided on the chassis; and an actuator provided on the chassis and for actuating the rotor to rotate while being driven by the servomotor 52. The rotating base 51 can be accomplished by referring to the prior art. The servomotor 52 according to one embodiment may be a stepping motor, and the actuator may be a gear or a belt, etc.. The rotation angles of the rotating base 51, for example, may be in a range of about 15° either to the right or to the left.

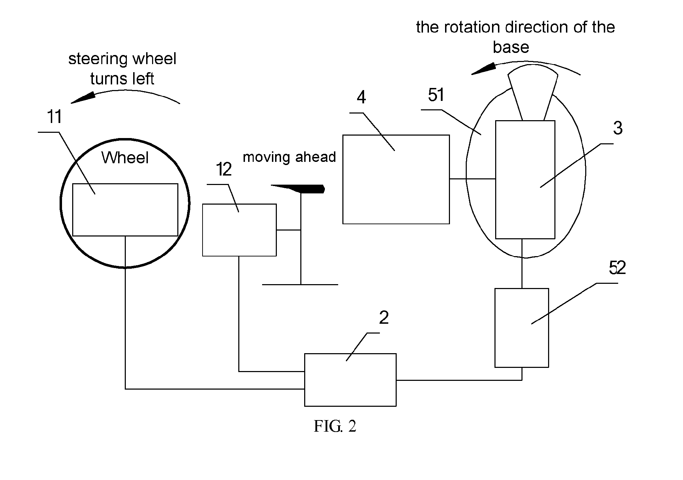

FIG. 2 to FIG. 5 respectively show the rotation directions of the wheel and the vehicle rotation followup mechanism when the vehicle is in forward gear or in reverse gear.

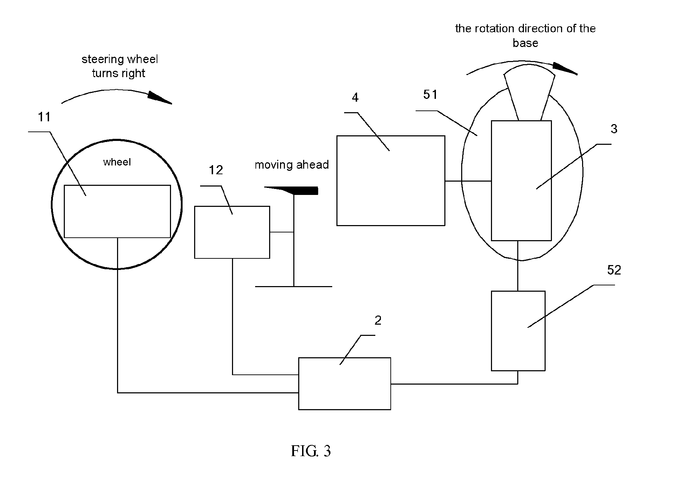

FIG. 2 and FIG. 3 show that when the vehicle moves ahead in forward gear, along with the wheel turning left (anti-clockwise rotation) or right (clockwise rotation), the wheel sensing mechanism 1 detects the rotation angles of the wheel and transmits the information of the rotation angles to the ECU 2, while the gear detector 12 senses the gear positions to obtain the information of the vehicle in forward gear, and then the gear detector 12 transmits the information of the vehicle in forward gear to the ECU 2.

The information collection module 21 of the ECU 2 receives the foregoing information of the rotation angle and the gear position and transmits the information to the computation module 22, and the computation module 22 calculates the corresponding azimuth of the vehicle. At this time, since the vehicle is moving ahead in forward gear, the azimuth of the vehicle is identical to the rotation angle, namely, both of them have the same value and are in the same direction.

The control module 23 generates control signals based on the azimuth signals of the vehicle from the computation module 22. The control signals are for driving the servomotor 52 of the vehicle rotation followup mechanism 5 to rotate and then driving the rotating base 51 and the night vision infrared camera 3 provided thereon to rotate according to the azimuths. It can be seen that, at this time, the rotating base 51 and the night vision infrared camera 3 is rotating in the same direction of the wheel turning left or right.

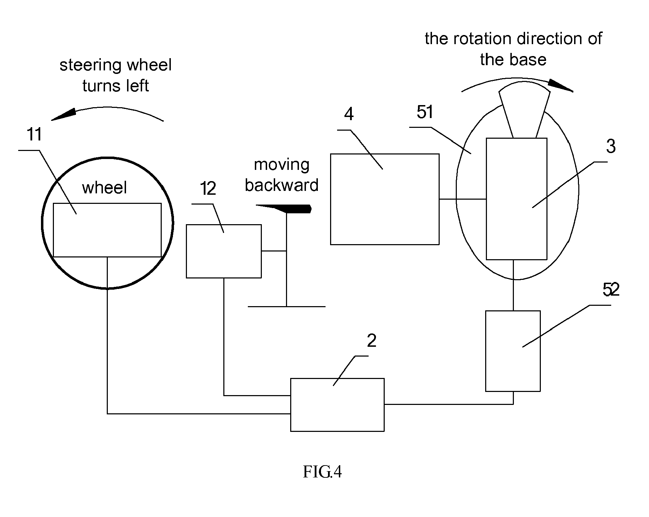

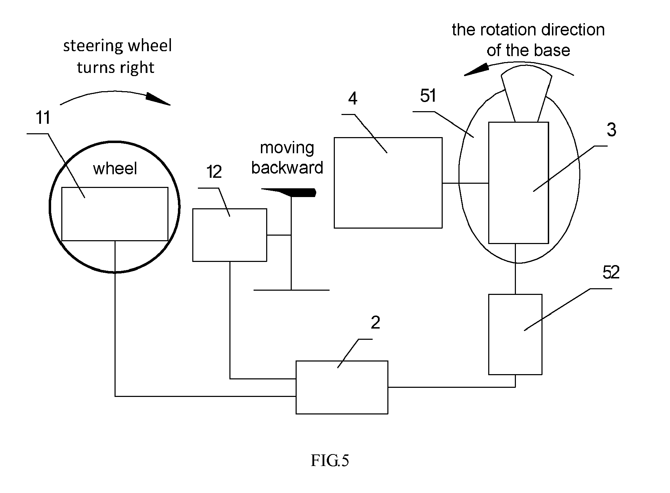

As shown in FIG. 4 and FIG. 5, when the vehicle moves backward in reverse gear, the head of the vehicle rotates in an opposite direction of the wheel, so when the detected information of the gear position indicates that the vehicle is moving backward, along with the wheel turning left or right, the vehicle rotation followup mechanism 5 and the night vision infrared camera 3 have values (azimuth of the vehicle) identical or corresponding to the rotation angle of the wheel, but is in an opposite direction.

It can be known from the above described embodiments that the LCD 4 connected with the night vision infrared camera 3 can directly displays the infrared images of objects ahead of the curve when the vehicle is about turning around. This will eliminate the blind zone and enable the driver to identify the roads, pedestrians, riders, obstacles and the like more quickly at night. Especially in an exhausted night driving, the system can provide more precise information of the road and longer time for the driver to respond upon the situations of the road, thus it's helpful for reducing the driver's pressure. The driver is able to be well-informed with the road situations even in bad visual conditions and to have enough time to quickly and duly cope with the emergencies, thus improving night driving safety.

## Claims

1. A vehicular infrared night assistant driving system, comprising:
a vehicle rotation followup mechanism (5) rotatably fixed at the front portion of the vehicle, the vehicle rotation followup mechanism (5) rotates an angle corresponding to a rotation of a wheel;
a night vision infrared camera (3) attached on the vehicle rotation followup mechanism (5), the night vision infrared camera (3) rotates synchronously with the rotation of the vehicle rotation followup mechanism (5) and captures infrared images of objects ahead of the vehicle in real time;
a wheel sensing mechanism (1) attached on the wheel, the wheel sensing mechanism (1) detects rotation angles of the wheel and gear positions of the vehicle in real time, and outputs information related to the rotation angles and the gear positions; and
an ECU (2) connected with the wheel sensing mechanism (1) and the vehicle rotation followup mechanism (5) respectively, the ECU (2) generates and outputs control signals for controlling the rotation of the vehicle rotation followup mechanism (5) based on the information related to the rotation angles and the gear positions from the wheel sensing mechanism (1).

2. The vehicular infrared night assistant driving system according to claim 1, wherein the vehicle rotation followup mechanism (5) comprises:
a rotatable base (51) rotatably attached at the front portion of the vehicle; and
a servomotor (52) connected with the rotatable base (51) and for driving the rotatable base (51) to rotate based on the control signals from the ECU (2).

3. The vehicular infrared night assistant driving system according to claim 2, wherein the rotatable base (51) comprises:
a chassis fixed at the front portion of the vehicle;
a rotor provided on the chassis; and
an actuator provided on the chassis and for actuating the rotor to rotate while being driven by the servomotor (52).

4. The vehicular infrared night assistant driving system according to claim 1 or 2, wherein the system further comprises:
a LCD (4) provided in a cab of the vehicle and connected with the night vision infrared camera(3), the LCD (4) displays the infrared images captured by the night vision infrared camera (3).

5. The vehicular infrared night assistant driving system according to claim 1 or 2, wherein the night vision infrared camera (3) comprises:
an infrared lens for collecting infrared signals of the objects ahead of the vehicle;
a UFPA infrared detector for transforming the infrared signals projected and focused thereon by the infrared lens into corresponding electrical signals; and
a video process unit connected with the UFPA infrared detector and for transforming the electrical signals into video signals.

6. The vehicular infrared night assistant driving system according to claim 1 or 2, wherein the wheel sensing mechanism (1) comprises:
a wheel rotation sensor (11) provided on the wheel, the wheel rotation sensor (11) senses rotation angles of the wheel and outputs corresponding information of the rotation angles to the ECU (2); and
a gear detector (12) provided on a gear control portion of the vehicle, the gear detector (12) senses the gear positions of the vehicle and outputs corresponding information of the gear positions to the ECU (2).

7. The vehicular infrared night assistant driving system according to claim 1 or 2, wherein the ECU (2) comprises:
an information collection module (21) connected with the wheel sensing mechanism (1) and for collecting the information of the rotation angles and the gear positions output from the wheel sensing mechanism (1);
a computation module (22) connected with the information collection module (21), the computation module (22) performs computations based on the information of rotation angles and the gear positions from the information collection module (21) to obtain azimuth signals of the vehicle; and
a control module (23) connected with the computation module (22) and for generating control signals based on the azimuth signals of the vehicle from the computation module (22), and then outputting the control signals to the vehicle rotation followup mechanism (5).

8. The vehicular infrared night assistant driving system according to claim 7, wherein the azimuth signals of the vehicle are signals related to the azimuths of the vehicle having values identical or corresponding to the rotation angles, when the information of the gear position indicates that the vehicle is moving ahead in forward gear, the azimuth of the vehicle is in the same direction of the rotation angle; and when the information of the gear position indicates that the vehicle is moving backward in reverse gear, the azimuth of the vehicle is in an opposite direction of the rotation angle.
